# EUROPÄISCHE PATENTSCHRIFT

(11) **EP 0 946 883 B1**
(45) Veröffentlichungstag und Bekanntmachung des Hinweises auf die Patenterteilung: **12.09.2001**
(21) Anmeldenummer: 97954440.0
(22) Anmeldetag: 19.12.1997
(51) Int. Cl.: G01S 5/16, G01B 11/00

(54) **VERFAHREN UND VORRICHTUNG ZUM MESSEN UND PRÜFEN VON WERKSTÜCKEN**
METHOD AND DEVICE TO MEASURE AND CHECK WORKPIECES
PROCEDE ET DISPOSITIF DE MESURE ET DE CONTROLE DE PIECES

(30) Priorität: 24.12.1996 DE 19654318
(43) Veröffentlichungstag der Anmeldung: 06.10.1999
(73) Patentinhaber: KUKA Schweissanlagen GmbH, 86165 Augsburg (DE)
(72) Erfinder: MÖLLER, Matthias, D-38162 Cremlingen (DE)
(74) Vertreter: Ernicke, Hans-Dieter, Dipl.-Ing.
(86) Internationale Anmeldenummer: EP9707173
(87) Internationale Veröffentlichungsnummer: WO9828632

(56) Entgegenhaltungen:
- EP-A- 0 390 648
- WO-A-93/07443
- DE-A- 4 327 937
- US-A- 4 763 417
- JIANG B C ET AL: "A REVIEW OF RECENT DEVELOPMENTS IN ROBOT METROLOGY" JOURNAL OF MANUFACTURING SYSTEMS, Bd. 7, Nr. 4, 1988, Seiten 339-357, XP000009603

## Beschreibung

Die Erfindung betrifft ein Verfahren und eine Vorrichtung zum Messen und Prüfen von Werkstücken, insbesondere von Karosserieteilen von Fahrzeugen mit den Merkmalen im Oberbegriff des Verfahrens- und Vorrichtungshauptanspruches.

Die DE-A-43 27 937 lehrt ein solches Verfahren nebst Vorrichtung zum Messen und Prüfen von Objekten. Hierbei wird eine Meßprobe eingesetzt, die einen Taster besitzt, mit dem das Objekt berührt wird. Dieser Taster ist starr ausgebildet. Die Meßprobe wird von Hand geführt und bedient. Auf der Meßprobe sind drei verteilte Leuchtdioden als Sender vorhanden. An der Raumdecke sind drei Empfänger für die elektromagnetische Strahlung verteilt angeordnet, in denen die Strahlung mit unterschiedlichen Laufzeiten empfangen wird. Aus den ermittelten Laufzeiten wird die räumliche Lage des betreffenden Objektpunktes berechnet.

Ein ähnliches Verfahren nebst Vorrichtung ist aus der WO-A-93/07443 bekannt. Mittels einer manuell geführten Meßprobe und eines externen optischen Winkelmessers werden Raumpunkte mit ihren Raumkoordinaten erfaßt und gemessen. Die Meßprobe besitzt mehrere außenseitig angeordnete Leuchtdioden, die als Positionsmelder fungieren und vom Winkelmesser optisch erfaßt werden. Die Meßprobe hat einen starren und unbeweglichen Taster, mit dem die zu vermessenden Raumpunkte berührt werden.

Die EP-A-0 390 648 zeigt ein anderes Meßverfahren nebst Vorrichtung zum Messen und Prüfen der Oberfläche von Objekten. Hierbei ist eine Meßprobe an einem in mehreren translatorischen Achsen beweglichen Probenhalter angeordnet. Die Meßprobe hat einen axial und radial beweglichen Taster, der von einer Membran elastisch gehalten wird. Der Taster wird über die Oberfläche des Werkstücks geführt und tastet diese auf Unebenheiten oder Höhenunterschiede ab, wobei er Bewegungen relativ zum Probenhalter ausführt. Die Tasterbewegungen werden optoelektronisch durch im Inneren der Meßprobe angeordnete Meßelemente gemessen und ausgewertet.

Aus der Literaturstelle Bernard C. Jiang et.al.: "A Review of Recent Developments in Robot Metrology", Journal of Manufacturing Systems, Bd. 7, Nr. 4, 1988, Seiten 339 bis 357 sind verschiedene optische Meß- und Prüfverfahren nebst Vorrichtungen zum Kalibrieren eines Roboters bekannt.

In der Praxis ist es ferner bekannt, das Messen und Prüfen von Karosserieteilen außerhalb der Fertigung in einem abgeschirmten Raum mittels einer mehrachsigen Koordinatenmaschine durchzuführen. Dieser Raum ist klimatisiert und schallisoliert. Die Koordinatenmaschine ist ein hochempfindliches Meßgerät, das über mehrere Bewegungsachsen mit einem Meßfühler die relevanten Meßpunkte am Werkstück abtastet. Dabei werden die Achsbewegungen aufgenommen und registriert. Aus den verschiedenen Achsbewegungen wird dann die Position der angefahrenen Meßpunkte berechnet. Diese Technik hat verschiedene Nachteile. Zum einen ist ein enormer Bau-und Kostenaufwand erforderlich. Zum anderen gehen die Toleranzen der einzelnen Achsen in den Meßfehler ein, was höchste Präzisionsanforderungen an die Maschinenteile der Koordinatenmaschine stellt. Vor allem ist durch den hohen Aufwand eine Messung erst am fertigen Karosserieteil möglich und aus Kostengesichtspunkten sinnvoll. In diesem Stadium sind nur noch nachträgliche Qualitätskontrollen möglich. Eine Korrektur der Fehler am Karosserieteil ist jedoch nicht mehr möglich.

Es ist daher Aufgabe der vorliegenden Erfindung, eine bessere Möglichkeit zum Messen und Prüfen von Werkstücken, insbesondere von Karosserieteilen von Fahrzeugen, aufzuzeigen.

Die Erfindung löst diese Aufgabe mit den Merkmalen im Verfahrens-und Vorrichtungshauptanspruch.
Die erfindungsgemäße Meßtechnik ist wesentlich weniger aufwendig als die vorbekannte Koordinatenmaschine. Sie ist auch in einem deutlich geringeren Umfang fehleranfällig, weil die Achsfehler des Roboters nicht in die Messung eingehen. Dies wiederum ermöglicht es, mit relativ einfachen Manipulatoren oder Robotern und ohne erhöhte Präzisionsanforderungen die Messung durchzuführen. Als weiterer Vorteil ist die geringe Störempfindlichkeit der Meßtechnik hervorzuheben, die weder klimatisierte, noch schall-und schwingungsisolierte Meßräume verlangt.

Die erfindungsgemäße Meßtechnik ist dadurch besonders wirtschaftlich. Sie erlaubt aber auch einen Einsatz innerhalb einer Fertigungsanlage. Die Messungen können dabei auch an verschiedenen Stellen im Fertigungsprozeß vorgenommen werden. Dies gestattet einen unmittelbaren Zugriff auf die Fehlerursachen und auch eine nachträgliche Korrektur eventuell festgestellter Fehler. Die Meßtechnik kann nämlich in einem Bereich eingesetzt werden, wo die Karosserieteile bzw. die aus den Einzelteilen zusammengesetzte Karosserie noch nicht vollends verfestigt ist und noch Korrektureingriffe gestattet. Die nach Auftreten eines Fehlers anschließenden Fertigungsschritte sind dadurch noch nutzbar. Beim Stand der Technik sind diese Folgeschritte beim frühen Auftreten eines Fehlers umsonst.

Durch die elastische Aufnahme der Meßprobe am Manipulator braucht die Führungsgenauigkeit des Manipulators nicht allzu hoch zu sein. Eventuelle Positionsfehler des Manipulators werden selbsttätig korrigiert. Die Meßpunkte haben üblicherweise eine besondere geometrische Form und bestehen aus Löchern oder Erhebungen, an denen sich ein entsprechend geformter Taster selbst fangen und zentrieren kann. Dadurch sind hohe Meßgenauigkeiten unabhängig von der Roboterführung und deren Fehlern möglich. Insbesondere können Messungen an beliebigen Meßpunkten der Werkstücke vorgenommen werden, wobei nur die Meßprobe im Sichtbereich des optischen Vermessungssystems sich befinden muß.

Die erfindungsgemäße Meßtechnik stellt auch keine hohen Anforderungen an die Bedienung und Auswertung. Sie kann auch mit weniger qualifizierten Bedienpersonen durchgeführt und gegebenenfalls sogar automatisiert werden.

Weitere Vorteile sind die besondere Stör-und Unfallsicherheit. Durch die elastische Aufnahme des Meßprobentasters werden auch schadensträchtige Kollisionen weitestgehend vermieden. Zudem sind Wartung und Reparatur der Meßvorrichtung auf einfache Weise möglich.

Die Unteransprüche geben vorteilhafte Ausgestaltungen der Erfindung wieder.

Die Erfindung ist in den Zeichnungen beispielsweise und schematisch dargestellt. Im einzelnen zeigen
- Figur 1:: Die Meßvorrichtung mit einem Werkstück in Seitenansicht,
- Figur 2:: eine vergrößerte Darstellung der Roboterhand mit der Meßprobe,
- Figur 3:: eine schematische Darstellung eines Werkstückes mit Meßpunkten und

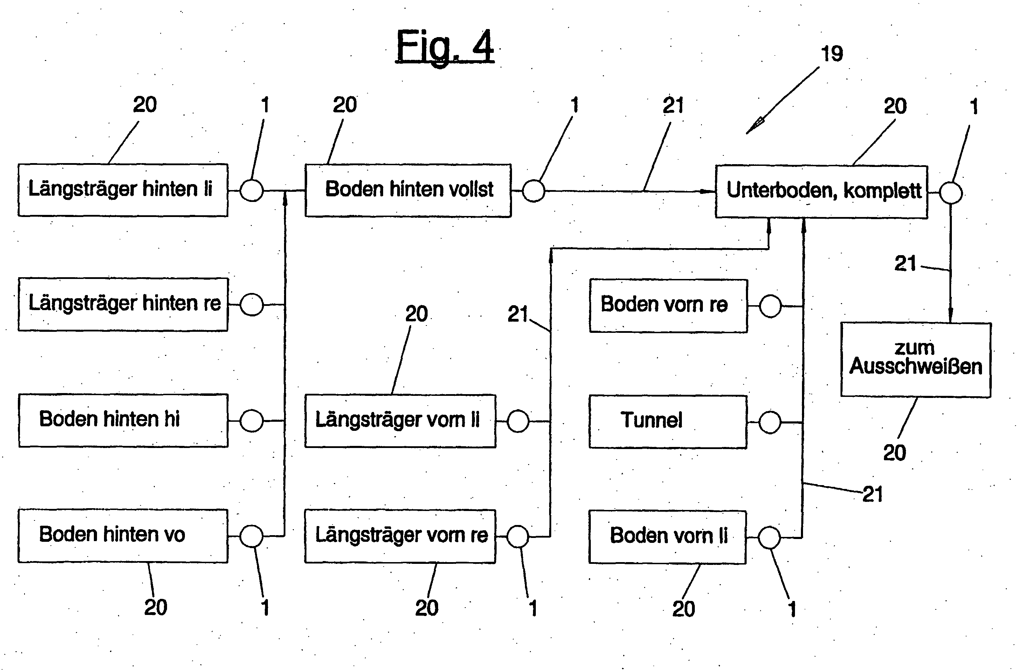

- Figur 4:: ein Schemaplan einer Rohbaufertigung im Rahmen der Unterbodenfertigung.

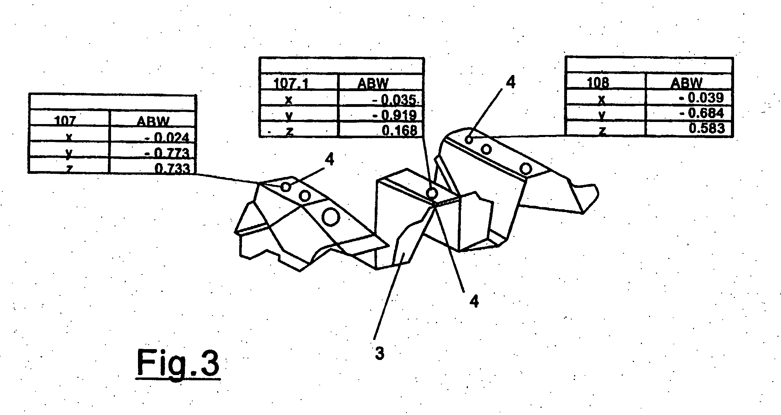

Die Erfindung betrifft ein Verfahren und eine Meßvorrichtung (1) zum Messen und Prüfen von Werkstücken (3). Bei den Werkstücken (3) handelt es sich vorzugsweise um Karosserieteile von Fahrzeugen, wie sie beispielsweise in Figur 3 als ein Teil der Unterbodengruppe dargestellt sind. Die Karosserieteile (3) werden in einer Fertigungsanlage (19) hergestellt, wobei in einzelnen Fertigungsbereichen (20) aus verschiedenen Einzelteilen Baugruppen gefertigt werden. Aus den Unterbaugruppen wird dann das fertige Karosserieteil, z.B. ein kompletter Unterboden, aufgebaut. Hinter einzelnen oder allen Fertigungsbereichen (20) ist jeweils eine Meßvorrichtung (1) angeordnet, die eine Messung und Prüfung des hier hergestellten Karosserieteils (3) vor der weiteren Be-und Verarbeitung ermöglicht. Die Meßvorrichtung (1) kann in den Fertigungsbereich (20) integriert sein. Vorzugsweise ist die Meßvorrichtung (1) nachgeschaltet und befindet sich in der Transferlinie (21). Die Transferlinie (21) ist der Förderbereich, über den die Werkstücke (3) von einen Fertigungsbereich (20) zum nächsten Fertigungsbereich (20) gelangen. Die Meßvorrichtung (1) kann in der Transferlinie (1) eine eigene Station bilden.

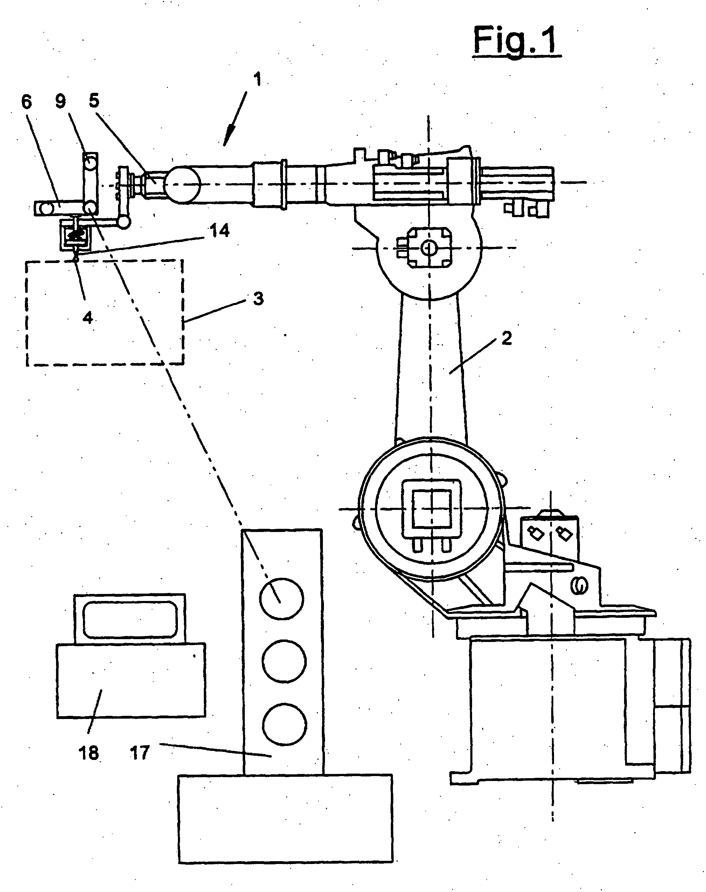

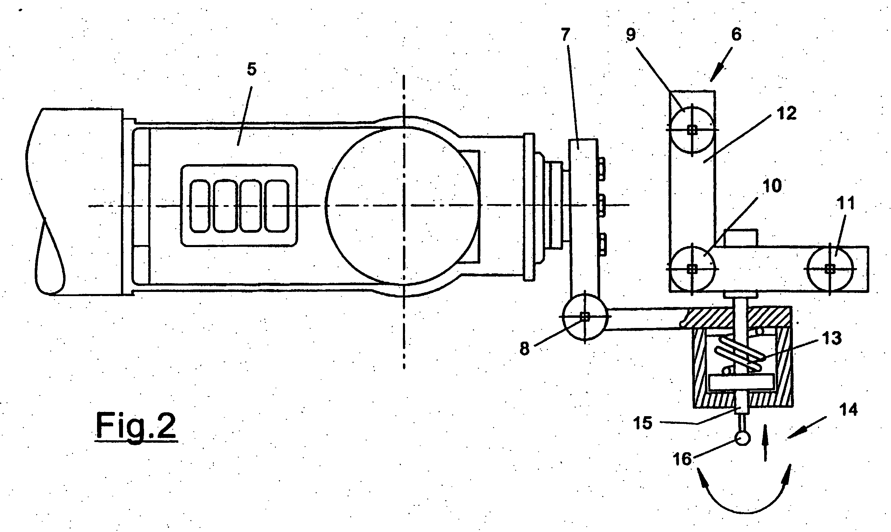

Die Meßvorrichtung (1) ist in Figur 1 und 2 näher dargestellt und beschrieben. Das Werkstück (3) ist in Figur 1 nur schematisch dargestellt. Es ist im Bereich der Meßvorrichtung (1) in einer nicht dargestellen Spannvorrichtung exakt gespannt und hat hier eine definierte und bekannte Lage.

Wie Figur 3 im einzelnen verdeutlicht, hat jedes Werkstück (3) ein oder mehrere definierte Meßpunkte (4). Anhand der Position der Meßpunkte (4) kann festgestellt werden, ob das Werkstück (3) maßhaltig ist. Die Meßpunkte (4) können eine Referenz für die Einhaltung der vorgegebenen Geometrie und der Maße des Werkstückes (3) bilden. In der gezeigten Ausführungsform handelt es sich bei dem Meßpunkt (4) z.B. um Löcher im Werkstück (3). Alternativ können die Meßpunkte (4) auch hoch ragende Stifte oder dergleichen sein, die z.B. Ansteckpunkte für andere Karosserieteile bilden. Es empfiehlt sich, die Meßpunkte (4) mit einer besonderen Geometrie, z.B. einer Erhebung oder Vertiefung zu versehen. Durch diese Geometrie unterscheiden sich die Meßpunkte (4) signifikant und vorzugsweise in der Form von den umgebenden Werkstückbereichen. Sie können dadurch leichter mechanisch ertastet werden.

Die Meßvorrichtung (1) besteht aus einer oder mehreren Meßproben (6) und einem optischen Vermessungssystem (17) sowie ein oder mehreren Manipulatoren (2). Bei den Manipulatoren (2) handelt es sich vorzugsweise um mehrachsige Industrieroboter. Im Ausführungsbeispiel ist ein sechsachsiger Roboter dargestellt. Die Meßprobe (6) ist an der Roboterhand (5) befestigt und wird von dieser geführt und bewegt. Zum Messen und Prüfen des Werkstücks (3) wird die Meßprobe (6) vom Roboter (2) an die Meßpunkte (4) angesetzt.

Das optische Vermessungssystem (17) besteht aus drei linearen Meßkameraeinheiten, die in einem Gehäuse nebeneinander oder übereinander angeordnet sind und einen festen Bezug zueinander haben. Das Kamerasystem (17) ist in der Lage, die Position der Meßprobe (6) nach sechs Achsen aufzunehmen und optisch zu vermessen. Zu diesem Zweck ist eine Recheneinheit (18) angeschlossen. Die Recheneinheit (18) ist vorzugsweise als Computer mit einem oder mehreren Mikroprozessoren, mehreren Daten- und Programmspeichern und den notwendigen I/O-Einheiten ausgerüstet. In der Recheneinheit (18) werden die vom Kamerasystem (17) aufgenommen Positionen der Meßprobe (6) berechnet und daraus die Positionen der gesuchten Meßpunkte (4) ermittelt. Die Meß-und Prüfergebnisse werden ebenfalls von der Recheneinheit (18) ausgegeben und in geeigneter Weise angezeigt, z.B. in der in Figur 3 dargestellten Tabellenform mit Kennzeichnung der Meßpunkte (4) und Angabe der Abweichungen von der Soll-Lage in den drei translatorischen Raumachsen.

Die Meßprobe (6) besitzt mindestens einen Positionsmelder (8,9,10,11), vorzugsweise drei oder mehr Positionsmelder. Hierbei handelt es sich vorzugsweise um schaltbare Leuchtelektroden, wenn sie aufleuchten, wird ihre Position im Raum von den Einheiten des Kamerasystems (17) aufgenommen und vermessen. Durch die verschiedenen Blickwinkel der drei Kameraneinheiten können die Positionen der Positionsmelder (8,9,10,11) im Raum exakt bestimmt werden. Dadurch ist auch die Orientierung der Meßprobe (6) genau ermittelbar. Die Aufnahme und Vermessung kann punktweise in Abständen oder auch kontinuierlich mit einer hohen Frequenz erfolgen, wodurch gegebenenfalls auch Bahnbewegungen der Meßprobe (6) ermittelbar sind.

Die Meßprobe (6) wird vom Manipulator (2) am jeweils gesuchten Meßpunkt (4) angesetzt. Dazu verfährt der Manipulator (2) bahngesteuert in die bekannte Soll-Lage des Meßpunktes (4) am gespannten Werkstück (3).

Das optische Vermessungssystem (10) ist in einem bekannten Ortsbezug angeordnet. Vorzugsweise ist es in einer bekannten absoluten Raumposition und in einer bekannten Ortsbeziehung zum World-Koordinaten-System der Station angeordnet, zu dem auch die Spannvorrichtung, das Werkstück (3) sowie der Roboter (2) in einer bekannten Ortsbeziehung stehen. Die vom Vermessungssystem (10) gemessenen Positionswerte der Positionsmelder (8,9,10,11,12) und die ermittelten Daten der Meßpunkte (4) liegen vorzugsweise als absolute Ortskoordinaten bezogen auf das World-Koordinaten-System vor.

Das optische Vermessungssystem (10) wird in der Station so aufgestellt, daß es möglichst freies Sichtfeld zum Werkstück (3) bzw. den Meßpunkten (4) und der Meßprobe (6) hat. Vorzugsweise besteht auch ein freies Sichtfeld zum Roboter (2) und ggf. ein oder mehreren Umgebungs-Referenzpunkten (nicht dargestellt). Letztere können einen Bezug zur Station angeben und bestehen z.B. aus einfachen mechanischen Spitzen.

Wie Figur 2 näher verdeutlicht, besteht die Meßprobe (6) z.B. aus einem L-förmig abgewinkelten Probenträger (12), an dessen markanten Eck-oder Endpunkten die Positionsmelder (9,10,11) sitzen. Der Probenträger (12) kann aber auch eine andere geeignete Gestalt haben.

Der Probenträger (12) hat in einer vereinfachten Ausführungsform einen Taster (14), der starr mit dem Probenträger (12) verbunden ist. Der Taster (14) besteht aus einem geraden Taststift (15) mit einem Tastkopf (16) am Ende. Der Tastkopf bzw. der ganze Taster (14) kann auswechselbar sein. Der Tastkopf (16) kann z.B. als Kugel, Kegelspitze, Kegelhut oder in sonstiger geeigneter Weise ausgebildet sein. Seine Form richtet sich nach der Gestalt des gesuchten Meßpunktes (4). Vorzugsweise hat der Tastkopf (16) Rundungen, Abschrägungen oder dergleichen andere Leitflächen, die eine Einführung oder Hinführung am Meßpunkt (4) erleichtern.

Die Meßprobe (6) kann einen Schalter zum Betätigen der Positionsmelder (9,10,11) haben. Außerdem kann eine Leitungsverbindung zur Recheneinheit (18) bzw. zum Kamerasystem (17) bestehen. Gegebenenfalls ist der Taster (14) mit einem Kontaktschalter (nicht dargestellt) verbunden, über den ein Kontakt mit dem Meßpunkt (4) festellbar ist. Über diesen Schalter könne Steuerbefehle an die Recheneinheit (18) gegeben werden, die z.B. für eine Speicherung der aufgenommen Positionen sorgen. Damit können auch Meß-oder Auswertevorgänge des Kamerasystems (17) bzw. der Recheneinheit (18) per Fernbedienung geschaltet werden.

Der Probenträger (12) ist ausweichfähig mit der Roboterhand (5) verbunden. Dabei ist ein Ausweichen nach ein oder mehreren Achsen möglich. Zu diesem Zweck besitzt die Meßprobe (6) ein Gestell (7), das an der Roboterhand (5) befestigt ist. Der Probenträger (12) ist über ein Federelement (13) am Gestell (7) in der besagten Weise ausweichfähig gelagert.

Im gezeigten Ausführungsbeispiel besteht das Federelement (13) aus einer Druckfeder mit Preßplatte, die den Taststift (15) umgibt und den Taster (14) mit dem Probenträger (12) gegen das Gestell (7) nach unten drückt. Das Gestell (7) hat ein das Federelement (13) umgebendes Gehäuse, indem der Taststift (15) höhenbeweglich und auch mit seitlichem Spiel in zwei Bohrungen geführt ist. Zusätzlich kann zur Abstützung der Feder am Taststift (15) im Gehäuseinneren eine Preßplatte vorhanden sein, die von der Feder in Anschlag mit den Gehäuseboden gedrückt wird. Bei dieser Gestaltung ist ein Ausweichen des Tasters (14) nach oben und ein Verschieben und/oder Verschwenken um die Querachse möglich.

Für die Ausgestaltung des Federelementes (13) gibt es verschiedene Alternativen. Es kann z.B. als Gummiblock, Preßluftbalg oder in sonstiger beliebig geeigneter Weise ausgestaltet sein, um eine elastisches Nachgeben des Tasters (14) und des Probenhalters (12) beim Ansetzen am Werkstück (3) zu ermöglichen.

Durch die ausweichfähige Lagerung des Probenhalters (12) werden Positionierfehler das Manipulators (2) bzw. Lagefehler des Meßpunktes (4) korrigiert. Die Lageungenauigkeiten sind in der Regel relativ begrenzt und kleiner als die Ausweichfähigkeit des Tasters(14). Innerhalb dieser Lagefehler ist der Taster (14) in der Lage, sich selbst durch die angepaßte Formgebung von Tastkopf (16) und Meßpunkt (4) in die richtige Position zum Meßpunkt (4) zu bringen und dementsprechend auch den Probenträger (12) auszurichten.

Die Positionsmelder (9,10,11) haben einen festen und bekannten Bezug zum Tastkopf (16). Über die Vermessung der Lage der Positionsmelder (9,10,11) ist dadurch exakt die Position des Tastkopfes (16) im Raum ermittelbar. Durch die Selbstsuchfunktion und die dadurch zielbare Treffergenauigkeit bzw. Positioniergenauigkeit am Meßpunkt (4) ist dadurch auch die Position des Meßpunktes (4) im Raum genau ermittelbar.

Die Abweichungen der Ist-Lage des Meßpunktes (4) von der Soll-Lage ergeben sich durch Vergleich der über die Positionsmelder(9,10,11) ermittelten Position mit der Soll-Lage am exakt gespannten Werkstück (3). Diese Abweichungen können in der vorbeschriebenen Tabellenform bei der Ausgabe der Meßergebnisse angezeigt werden. Zusätzlich kann am Gestell (7) mindestens ein zusätzlicher Positionsmelder (8) angeordnet sein. Er dient als Referenz für die programmierte Soll-Lage der Roboterhand (5) bzw. des Tool-Center-Points (TCP) bzw. des Tastkopfes (16). Dieser Positionsmelder (8) wird bei der Vermessung ebenfalls erfaßt. Er hat eine bestimmte räumliche Zuordnung zum Tastkopf (16) in Ruhe-oder Normalposition des Probenträgers (12) ohne Auslenkung des Federelementes (13). Über den Positionsmelder (8) ist auch die Abweichung der Ist-Lage des Meßpunktes (4) bzw. des Tastkopfes (16) von der in der Bahnsteuerung des Manipulators (2) vorgebenen Position feststellbar.

### BEZUGSZEICHENLISTE

- 1: Meßvorrichtung
- 2: Manipulator, Roboter
- 3: Werkstück, Karosserieteil
- 4: Meßpunkt
- 5: Roboterhand
- 6: Meßprobe
- 7: Gestell
- 8: Postionsmelder, Referenz LED
- 9: Postionsmelder, LED
- 10: Postionsmelder, LED
- 11: Postionsmelder, LED
- 12: Probenträger
- 13: Federelement
- 14: Taster
- 15: Taststift
- 16: Tastkopf
- 17: optisches Vermessungssystem, Kamerasystem
- 18: Recheneinheit
- 19: Fertigungsanlage
- 20: Fertigungsbereich
- 21: Transferlinie

## Patentansprüche

1. Verfahren zum Messen und Prüfen von Werkstücken (3), insbesondere von Karosserieteilen von Fahrzeugen, wobei die Position von ein oder mehreren definierten Messpunkten (4) am Werkstück (3) vermessen wird und die Messung mit einer Meßprobe (6) durchgeführt wird, die einen Probenträger (12) mit einem Taster (14) und mit ein oder mehreren außenseitigen, optisch erfassbaren Positionsmeldern (8, 9, 10, 11) aufweist, wobei die Meßprobe (6) mit dem Taster (14) am Messpunkt (4) angesetzt wird und die Positionsmelder (8,9,10,11) zur Lagebestimmung von einem externen ortsbezogenen optischen Vermessungssystem (17) angemessen werden und hieraus die Position der Messpunkte (4) ermittelt wird, **dadurch gekennzeichnet, dass** die Meßprobe (6) von einem Manipulator (2) mit einer Roboterhand (5) an die Meßpunkte (4) des Werkstücks (3) mechanisch tastend angesetzt wird, wobei die Meßprobe (6) ein mit der Roboterhand (5) verbundenes Gestell (7) und den daran elastisch gelagerten Probenträger (12) aufweist und der Probenträger (12) vom Manipulator (2) mit einer elastischen Ausweichfähigkeit nach ein oder mehreren Achsen gegenüber der Roboterhand (5) gehalten wird, wobei der Taster (14) in der Form an die Gestalt der Messpunkte (4) angepasst wird und selbstfangend oder selbstzentrierend an die Messpunkte (4) angesetzt wird.

2. Verfahren nach Anspruch 1, **dadurch gekennzeichnet, dass** die Messung innerhalb einer Fertigungsanlage (19) an ein oder mehreren Fertigungsbereichen (20) durchgeführt wird.

3. Verfahren nach Anspruch 2, **dadurch gekennzeichnet, dass** die Messung im Anschluß an einen Fertigungsbereich (20) in der Transferlinie (21) durchgeführt wird.

4. Vorrichtung zum Messen und Prüfen von Werkstücken (3), insbesondere von Karosserieteilen von Fahrzeugen, wobei die Position von ein oder mehreren definierten Messpunkten (4) am Werkstück (3) vermessen wird und wobei die Meßvorrichtung (1) mindestens eine Meßprobe (6) mit einem Probenträger (12), einem Taster (14) und ein oder mehreren außenseitigen, optisch erfassbaren Positionsmeldern (8,9,10,11) sowie ein externes ortsbezogenes optisches Vermessungssystem (17) mit einer Recheneinheit (18) aufweist, **dadurch gekennzeichnet, dass** ein Manipulator (2) mit einer Roboterhand (5) die Meßprobe (6) führt, wobei die Meßprobe (6) ein mit der Roboterhand (5) verbundenes Gestell (7) und den daran mit einer Ausweichfähigkeit nach ein oder mehreren Achsen elastisch gelagerten Probenträger (12) mit dem Taster (14) und den Positionsmeldern (9,10,11) aufweist und dass der Taster (14) einen Tastkopf (16) mit einer an die Gestalt der Messpunkte (4) angepassten selbstfangenden oder selbstzentrierenden Form besitzt.

5. Vorrichtung nach Anspruch 4, **dadurch gekennzeichnet, dass** der Taster (14) oder der Tastkopf (16) auswechselbar ist.

6. Vorrichtung nach Anspruch 4 oder 5, **dadurch gekennzeichnet, dass** der Probenträger (12) über ein höhenverstellbares und kippbares Federelement (13) am Gestell (7) gelagert ist.

7. Vorrichtung nach Anspruch 6, **dadurch gekennzeichnet, dass** das Federelement (13) den Taster (14) umgibt.

8. Vorrichtung nach einem der Ansprüche 4 bis 7, **dadurch gekennzeichnet, dass** am Gestell (7) ein oder mehrere weitere Positionsmelder (8) angeordnet sind.

9. Vorrichtung nach einem der Ansprüche 4 bis 8, **dadurch gekennzeichnet, dass** die Meßvorrichtung (1) an ein oder mehreren Stellen innerhalb einer Fertigungsanlage (19) angeordnet ist.

10. Vorrichtung nach Anspruch 9, **dadurch gekennzeichnet, dass** die Meßvorrichtung (1) ein oder mehreren Fertigungsbereichen (20) zugeordnet ist.

11. Vorrichtung nach Anspruch 9 oder 10, **dadurch gekennzeichnet, dass** die Meßvorrichtung (1) im Anschluß an einen Fertigungsbereich (20) innerhalb der Transferlinie (21) angeordnet ist.

## Claims

1. Method of measuring and checking workpieces (3), in particular parts of vehicle bodies, the position of one or defined measurement points (4) on the work piece (3) being surveyed and the measurement being carried out with a measuring probe (6) which has a probe carrier (12) with a feeler (14) and with one or more external, optically detectable position indicators (8, 9, 10, 11), the measuring probe (6) with the feeler (14) being placed on the measurement point (14) and, in order to determine the position, the position indicators (8, 9, 10, 11) being measured by an external, location-based optical surveying system (17) and, from this, the position of the measurement points (4) being determined, **characterized in that** the measuring probe (6) is placed on the measurements (4) on the work piece (3) so as to sense the latter mechanically, by a manipulator (2) with a robot hand (5), the measuring probe (6) having a frame (7) connected to the robot hand (5) and the probe carrier (12) resiliently mounted on the said frame (7), and the probe carrier (12) being held by the manipulator (2) with resilient compliance towards one or more axes with respect to the robot hand (5), the form of the feeler (14) being matched to the shape of the measurement points (4) and being placed on the measurement points (4) in a self-catching or self-centring manner.

2. Method according to Claim 1, **characterized in that** the measurement is carried out within a production plant (19) in one or more production areas (20).

3. Method according to Claim 2, **characterized in that** the measurement is carried out after a production area (20), in the transfer line (21).

4. Apparatus for measuring and checking workpieces (3), in particular parts of vehicle bodies, the position of one or more defined measurement points (4) on the work piece (3) being surveyed, and the measuring apparatus (1) having at least one measuring probe (6) with a probe carrier (12), a feeler (14) and one or more external, optically detectable positioning indicators (8, 9, 10, 11) and an external, location-based optical surveying system (17) having a computing unit (18), **characterized in that** a manipulator (2) guides the measuring probe (6) with a robot hand (5), the measuring probe (6) having a frame (7) connected to the robot hand (5) and the probe carrier (12) resiliently mounted on the said frame (7) with a compliance towards one or more axes and having the feeler (14) and the position indicators (9, 10, 11), and in that the feeler (14) has a sensing head (16) with a self-catching or self-centring form matched to the shape of the measurement points (4).

5. Apparatus according to Claim 4, **characterized in that** the feeler (14) or the sensing head (16) is replaceable.

6. Apparatus according to Claim 4 or 5, **characterized in that** the probe carrier (12) is mounted on the frame (7) via a spring element (13) that can be adjusted vertically and tilted.

7. Apparatus according to Claim 6, **characterized in that** the spring element (13) surrounds the feeler (14).

8. Apparatus according to one of Claims 4 to 7, **characterized in that** one or more further position indicators (8) are arranged on the frame (7).

9. Apparatus according to one of Claims 4 to 8, **characterized in that** the measuring apparatus (1) is arranged at one or more locations within a production plant (19).

10. Apparatus according to Claim 9, **characterized in that** the measuring apparatus (1) is assigned to one or more production areas (20).

11. Apparatus according to Claim 9 or 10, **characterized in that** the measuring apparatus (1) is arranged after a production area (20) within the transfer line (21).

## Revendications

1. Procédé de mesure et de vérification de pièces (3) notamment de parties de carrosserie de véhicule automobile, la position d'un point (4) ou de plusieurs points (4) de mesure défini sur la pièce (3) étant mesurée, et la mesure étant effectuée par une sonde (6) de mesure qui comporte un support (12) de sonde ayant un palpeur (14) et ayant un indicateur ou plusieurs indicateurs (8, 9, 10, 11) de position, qui sont du côté extérieur et qui peuvent être détectés par voie optique, la sonde (6) de mesure étant mise avec le palpeur (14) sur le point (4) de mesure, et les indicateurs (8, 9, 10, 11) de position étant mesurés pour la détermination de la position par un système (17) optique de mesure, extérieur et rapporté à l'emplacement, et la position du point (4) de mesure en étant déterminée, **caractérisé en ce que** la sonde (6) de mesure est mise, avec balayage mécanique, par un manipulateur ayant une main (5) de robot, sur le point (4) de mesure de la pièce (3), la sonde (6) de mesure comportant un bâti relié à la main (5) du robot et au support (12) de sonde qui y est monté élastiquement, et le support (12) de robot étant maintenu par le manipulateur (2) avec possibilité de s'écarter élastiquement suivant un axe ou suivant plusieurs axes par rapport à la main (5) du robot, la forme du palpeur (14) étant adaptée à la configuration du point (4) de mesure et étant mise en se prenant de soi-même ou en se centrant de soi-même sur le point (4) de mesure.

2. Procédé suivant la revendication 1, **caractérisé en ce qu'**il consiste à effectuer la mesure dans une installation (19) de fabrication, sur une zone (20) de fabrication ou sur plusieurs zones (20) de fabrication.

3. Procédé suivant la revendication 2, **caractérisé en ce qu'**il consiste à effectuer la mesure à la suite d'une zone (20) de fabrication de la ligne (21) de transfert.

4. Installation de mesure et de vérification de pièces (3) notamment de parties de carrosserie de véhicule automobile, la position d'un point (4) de mesure défini ou de plusieurs points (4) de mesure défini étant mesurée sur la pièce (3), et l'installation (1) de mesure comportant une sonde (6) de mesure ayant un support (12) de mesure, un palpeur (14) et un indicateur (8, 9, 10, 11) de position ou plusieurs indicateurs (8, 9, 10, 11) de position du côté extérieur et qui peuvent être détectés par voie optique, ainsi qu'un système (17) de mesure par voie optique extérieur et rapporté à l'emplacement, ayant une unité (18) informatique, **caractérisée en ce qu'**un manipulateur (2) ayant une main (5) de robot guide la sonde (6) de mesure, la sonde (6) de mesure comportant un bâti (7) relié à la main (5) de robot et le support (12) de sonde monté élastiquement avec possibilité de s'écarter suivant un axe ou suivant plusieurs axes, avec le palpeur (14) et les indicateurs (9,10,11) de position, et en ce que le palpeur (14) a une tête (16) de palpage, ayant une forme se prenant de soi-même ou se centrant de soi-même, qui est adaptée à la configuration des points (4) de mesure.

5. Installation suivant la revendication 4, **caractérisée en ce que** le palpeur (14) ou la tête (6) de palpage peuvent être remplacés.

6. Installation suivant la revendication 4 ou 5, **caractérisée en ce que** le support (12) de sonde est monté sur le bâti (17) par l'intermédiaire d'un élément (13) élastique, pouvant être réglé en hauteur et pouvant basculer.

7. Installation suivant la revendication 6, **caractérisée en ce que** l'élément (13) élastique entoure le palpeur (14).

8. Installation suivant l'une des revendications 1 à 4, **caractérisée en ce qu'**il est monté sur le bâti (7), un autre indicateur (8) de position ou plusieurs autres indicateurs (8) de position.

9. Installation suivant l'une des revendications 4 à 8, **caractérisée en ce que** l'installation (1) de mesure est montée en un point ou en plusieurs points à l'intérieur d'une installation (19) de fabrication.

10. Installation suivant la revendication 9, **caractérisée en ce que** l'installation 1 de mesure est associée à une zone (20) de fabrication ou à plusieurs zones (20) de fabrication.

11. Installation suivant la revendication 9 ou 10, **caractérisée en ce que** l'installation 1 de mesure est disposée à la suite d'une zone (20) de fabrication, à l'intérieur d'une ligne (21) de transfert.
